# EUROPÄISCHE PATENTSCHRIFT

(11) **EP 2 077 474 B1**
(45) Veröffentlichungstag und Bekanntmachung des Hinweises auf die Patenterteilung: **21.07.2010**
(21) Anmeldenummer: 07025143.4
(22) Anmeldetag: 27.12.2007
(51) Int. Cl.: G05B 19/409

(54) **Bedieneinrichtung und Verfahren zum Zuweisen eines Bedienbilds an eine Softkeytaste**
Operating device and method for assigning a control display to a soft-key button
Dispositif de commande et procédé d'assignation d'un écran de commande à une touche programmable

(43) Veröffentlichungstag der Anmeldung: 08.07.2009
(73) Patentinhaber: SIEMENS AKTIENGESELLSCHAFT, 80333 München (DE)
(72) Erfinder: Scheuermann, Uwe, 90431 Nürnberg (DE)

(56) Entgegenhaltungen:
- EP-A- 1 482 398

## Beschreibung

Die Erfindung betrifft eine Bedieneinrichtung zur Bedienung einer Werkzeugmaschine, einer Produktionsmaschine, eines Krans und/oder eines Roboters.

Weiterhin betrifft die Erfindung ein Verfahren zum Zuweisen eines Bedienbilds an eine Softkeytaste bei einer Bedieneinrichtung zur Bedienung einer Werkzeugmaschine, einer Produktionsmaschine, eines Krans und/oder eines Roboters.

Die Bedienung von Werkzeugmaschinen, Produktionsmaschinen, Kränen und/oder Robotern wird handelsüblich mittels Bedieneinrichtungen durchgeführt, die entsprechende Tasten zur Bedienung aufweisen. Dabei werden zunehmend sogenannte Softkeytasten zur Bedienung verwendet. Als Softkeytaste wird eine Taste bezeichnet, die abhängig von einem auf einen Bildschirm der Bedieneinrichtung dargestellten Bedienbild unterschiedliche Funktionen ausführt.

Das Zuweisen von Softkeytasten bei einer Bedieneinrichtung zur Bedienung einer Werkzeugmaschine, einer Produktionsmaschine, eines Krans und/oder eines Roboters wird handelsüblich über das komplexe Ändern von Einstellungsdateien oder über komplexe zusätzliche langwierige Bediendialoge realisiert.

Bei handelsüblichen Bedieneinrichtungen muss ein Bediener heutzutage oftmals, wenn er eine bestimmte Bedienhandlung ausführen will, durch häufiges und langwieriges mehrmaliges Betätigen der Softkeytasten Menüs und zugehörige Untermenüs anwählen, bevor eine mit einem bestimmten Bedienbild zugehörige Bedienfunktionalität ausführen kann.

Aus der EP 1 482 398 A2 ist ein Verfahren zur Programmierung einer Taste einer Tastatur bekannt.

Der Erfindung liegt die Aufgabe zugrunde, ein einfaches Zuweisen eines Bedienbilds an eine Softkeytaste bei einer Bedieneinrichtung zur Bedienung einer Werkzeugmaschine, einer Produktionsmaschine, eines Krans und/oder eines Roboters zu ermöglichen.

Diese Aufgabe wird gelöst durch eine Bedieneinrichtung zur Bedienung einer Werkzeugmaschine, einer Produktionsmaschine, eines Krans und/oder eines Roboters, wobei die Bedieneinrichtung einen Bildschirm, Softkeytasten und eine Bedientaste aufweist, wobei die Bedieneinrichtung derart ausgebildet ist, dass bei Aufruf eines Bedienbilds, das aufgerufene Bedienbild visualisiert wird, wobei die Bedieneinrichtung derart ausgebildet ist, dass durch Drücken auf die Bedientaste ein Anwendermenü visualisiert wird, das Beschriftungsfelder aufweist, die jeweilig zugehörigen Softkeytasten zugeordnet sind, wobei die Bedieneinrichtung derart ausgebildet ist, dass nach dem Drücken der Bedientaste durch Drücken über eine längeren Zeitraum auf eine Softkeytaste, die solchermaßen gedrückte Softkeytaste dem aufgerufenen Bedienbild zugewiesen wird.

Weiterhin wird diese Aufgabe gelöst durch Verfahren zum Zuweisen eines Bedienbilds an eine Softkeytaste bei einer Bedieneinrichtung zur Bedienung einer Werkzeugmaschine, einer Produktionsmaschine, eines Krans und/oder eines Roboters, wobei ein Bedienbild aufgerufen wird, wobei das aufgerufene Bedienbild von der Bedieneinrichtung visualisiert wird, wobei durch Drücken auf eine Bedientaste ein Anwendermenü visualisiert wird, das Beschriftungsfelder aufweist, die jeweilig zugehörigen Softkeytasten zugeordnet sind, wobei nach dem Drücken der Bedientaste durch Drücken über eine längeren Zeitraum auf eine Softkeytaste, die solchermaßen gedrückte Softkeytaste dem aufgerufenen Bedienbild zugewiesen wird. Weiterhin erweist es sich als vorteilhaft, eine Werkzeugmaschine, eine Produktionsmaschine, einen Kran und/oder einen Roboter mit der erfindungsgemäßen Bedieneinrichtung auszubilden.

Ein Ausführungsbeispiel der Erfindung ist in der Zeichnung dargestellt und wird im Folgenden näher erläutert. Dabei zeigen:
- FIG 1: eine erfindungsgemäße Bedieneinrichtung mit einem Bedienbild,
- FIG 2: eine erfindungsgemäße Bedieneinrichtung mit einem aufgerufenen Bedienbild und
- FIG 3: eine erfindungsgemäße Bedieneinrichtung mit einem Anwendermenü.

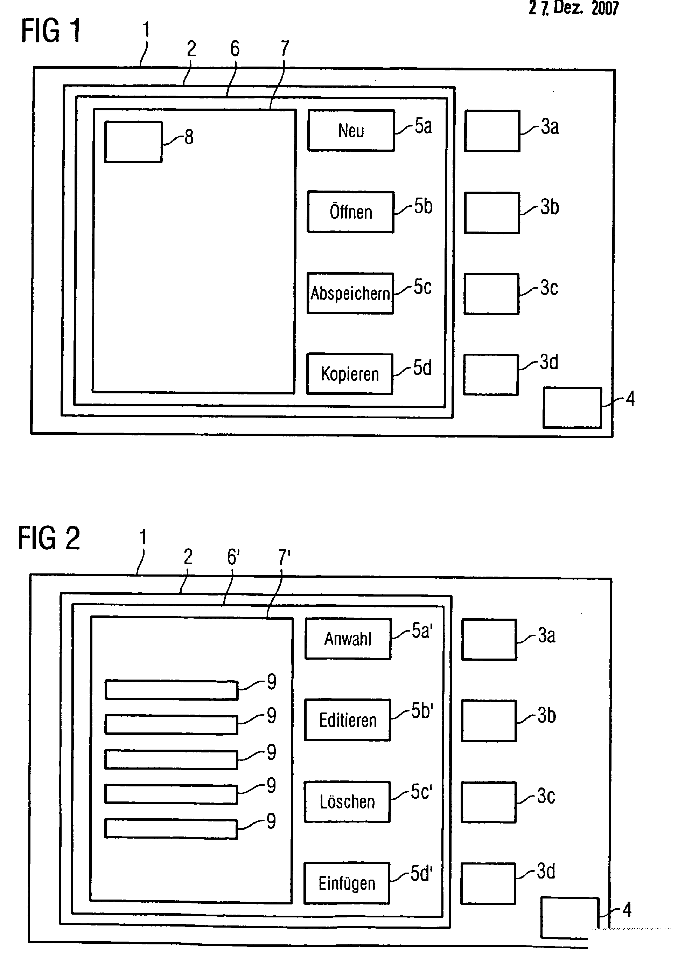

In FIG 1 ist in Form einer schematisierten Darstellung eine Bedieneinrichtung 1 zur Bedienung einer Werkzeugmaschine, einer Produktionsmaschine, eines Krans und/oder eines Roboters dargestellt. Die Bedieneinrichtung 1 weist einen Bildschirm 2, am Rande außerhalb des Bildschirms 2 angeordnete Softkeytasten 3a,3b,3c und 3d, sowie eine Bedientaste 4, auf. Vom Bildschirm 2 wird ein Bedienbild 6 visualisiert, das ein Funktionsbild 7 und Beschriftungsfelder 5a, 5b, 5c und 5d aufweist. In den Beschriftungsfeldern 5a, 5b, 5c und 5d wird dabei eine für das jeweils gerade visualisierte Bedienbild zugehörige Funktionalität ("Neu", "Öffnen", "Abspeichern", "Kopieren") visualisiert. Dem Beschriftungsfeld 5a ist dabei die Softkeytaste 3a, dem Beschriftungsfeld 5b die Softkeytaste 3b, dem Beschriftungsfeld 5c die Softkeytaste 3c und dem Beschriftungsfeld 5d die Softkeytaste 3d zugeordnet. Im Funktionsbild 7 wird im Rahmen des Ausführungsbeispiels gerade ein Teileprogramm 8, z.B. in Form einer Datei (Dateisymbol), dargestellt. In den Beschriftungsfeldern wird die jeweilige Funktion angezeigt, die beim Drücken der jeweilig zugeordneten Softkeytaste ausgeführt wird. Abhängig vom gerade visualisierten Bedienbild können somit den Softkeytasten unterschiedliche Funktionen zugeordnet werden, die in der dem jeweiligen Softkeytaste zugeordneten Beschriftungsfeld angezeigt werden. Durch Drücken der Softkeytaste 3b wird z.B., entsprechend der im Beschriftungsfeld 5b angezeigten Funktion "Öffnen" die Datei geöffnet und gleichzeitig ein Bedienbild 6' aufgerufen (siehe FIG 2).

In dem Bedienbild 6' werden wiederum ein Funktionsbild 7' und Beschriftungsfelder 5a',5a',5c',5d', sowie die Programmzeilen 9 des nun geöffneten Teileprogramms 8 visualisiert, was in FIG 2 dargestellt ist. Die Softkeytaste 3a weist nun im Bedienbild 6', entsprechend dem Beschriftungsfeld 5a', die Funktion "Anwahl" auf, während z.B. die Softkeytaste 3b die Funktion "Editieren", entsprechend dem Beschriftungsfeld 5b' aufweist. Bei Drücken der Softkeytaste 3a und 3b wird die entsprechende jeweilig zugehörige Funktion ausgeführt.

Den Softkeytasten sind somit keine festen Funktionen zugeordnet, sondern diese können wechseln in Abhängigkeit des gerade aufgerufenen und visualisierten Bedienbilds.

Für die Durchführung einer bestimmten Funktionalität muss der Anwender sich bei handelsüblichen Bedieneinrichtungen häufig mittels Drücken der Softkeytasten durch verschiedene Menüs und insbesondere Untermenüs, die in Form von unterschiedlichen Bedienbildern vorliegen, durchdrücken bevor er das Bedienbild erreicht in dem er die gewünschte Funktionalität ausführen kann.

Hier setzt nun die Erfindung an und schafft, durch die Möglichkeit eines einfachen Zuweisens eines bestimmten Bedienbildes an eine Softkeytaste, dem Bediener eine schnelle Möglichkeit die entsprechende Bedienfunktionalität durchzuführen, ohne sich mittels der Softkeytasten durch die mittels der Bedienbilder visualisierten Menüs, einzeln durchdrücken zu müssen, bis er die gewünschte Funktionalität ausführen kann.

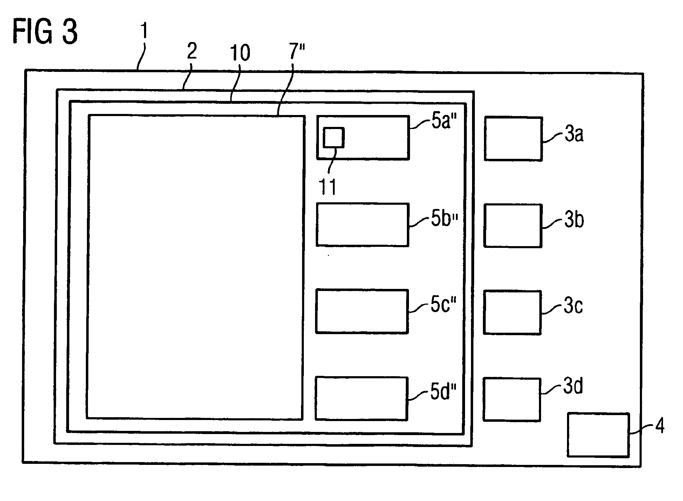

Erfindungsgemäß weist die Bedieneinrichtung 1 hierzu eine Bedientaste 4 auf, der fest ein Anwendermenü zugeordnet ist. Das gerade am Bildschirm aufgerufene visualisierte Bedienbild 6' gemäß FIG 2 wird hierzu in dem Anwendermenü eine bestimmte ausgewählte Softkeytaste zugewiesen. Hierzu wird vom Bediener beim visualisierten Bedienbild 6' die Bedientaste 4 gedrückt, wobei durch Drücken der Bedientaste 4 das in FIG 3 dargestellte Anwendermenü 10 visualisiert wird. Das Anwendermenü 10 weist wiederum ein Funktionsbild 7" und Beschriftungsfelder 5a",5b",5c" und 5d" auf, die den jeweilig zugehörigen Softkeytasten 3a, 3b, 3c und 3d zugeordnet sind. Soll nun z.B. das zuletzt aufgerufene Bedienbild 6' der Softkeytaste 3a zugewiesen werden, so ist nach dem Drücken der Bedientaste 4 lediglich ein Drücken durch den Anwender über einen längeren Zeitraum auf die Softkeytaste 3a notwendig. Solchermaßen wird durch Drücken über einen längeren Zeitraum auf die Softkeytaste 3a, die Softkeytaste 3a dem aufgerufenen Bedienbild 6' zugewiesen. Im Rahmen der Erfindung wird dabei unter einem längeren Zeitraum ein Zeitraum von 0,5 Sekunden bis 60 Sekunden verstanden. Nach dem Zuweisen der Softkeytaste 3a zu den Bedienbild 6' wird ein Symbol 11 des Bedienbilds 6' auf dem zu der Softkeytaste 3a zugehörigen Beschriftungsfelds 5a" im Anwendermenü 10 visualisiert um dem Bediener anzuzeigen, dass der entsprechenden Softkeytaste das Bedienbild 6' zugewiesen wurde.

Vorzugsweise wird nach Drücken auf die Bedientaste 4 das zuletzt aufgerufene Funktionsbild 7' des Bedienbildes 6' als Funktionsbild 7" im Anwendermenü 10 visualisiert.

Das zuletzt aufgerufene Bedienbild 6' ist, wie schon gesagt, nun im Anwendermenü 10 die Softkeytaste 3a zugewiesen. Nachfolgend kann nun vom Bediener das Bedienbild 6' aus jedem beliebig dargestellten Bedienbild und damit aus jedem beliebigen Menü heraus einfach direkt aufgerufen werden, indem der Bediener auf die Bedientaste 4 drückt und ihm nach Drücken der Bedientaste 4 das Anwendermenü 10 visualisiert wird und er anschließend die dem Bedienbild 6' im Anwendermenü bereits zuvor zugewiesene Softkeytaste 3a im Anwendermenü kurzzeitig drückt. Nach dem Drücken der Softkeytaste 3a im Anwendermenü wird dem Bediener nun sofort das Bedienbild 6', gemäß FIG 2, visualisiert und er kann direkt, die zu dem Bedienbild 6' zugehörigen, in dem Beschriftungsfeldern 5a',5b',5c',5d' angezeigten Funktion, durch Drücken der jeweilig zugehörigen Softkeytasten 3a, 3b, 3c und 3d ausführen. Ein umständliches Durchdrücken durch verschiedene Bedienbildern, mittels der Softkeytasten, bis der Bediener zu dem gewünschten Bedienbild kommt mit dem er seine gewünschte Funktionalität ausführen kann, ist somit nicht mehr notwendig, sondern durch die Erfindung wird dem Bediener sozusagen ein Direkteinstieg auf das für ihn gerade benötigte Bedienbild ermöglicht.

Selbstverständlich können im Falle der Verwendung eines berügungsempfindlichen Bildschirms (Touchscreen) die Softkeytasten auch in Form von virtuellen Tasten auf dem Bildschirm visualisiert sein und vorzugweise an der Position der Beschriftungsfelder visualisiert werden, so das Beschriftungsfelder und Softkeytasten eine visuelle Einheit bilden.

## Patentansprüche

1. Bedieneinrichtung (1) zur Bedienung einer Werkzeugmaschine, einer Produktionsmaschine, eines Krans und/oder eines Roboters, wobei die Bedieneinrichtung (1) einen Bildschirm (2), Softkeytasten (3a,3b,3c,3d) und eine Bedientaste (4) aufweist, wobei die Bedieneinrichtung (1) derart ausgebildet ist, dass bei Aufruf eines Bedienbilds (6'), das aufgerufene Bedienbild (6') visualisiert wird, wobei die Bedieneinrichtung (1) derart ausgebildet ist, dass durch Drücken auf die Bedientaste (4) ein Anwendermenü (10) visualisiert wird, das Beschriftungsfelder (5a",5b",5c",5d") aufweist, die den jeweilig zugehörigen Softkeytasten (3a,3b,3c,3d) zugeordnet sind, **dadurch gekennzeichnet, dass** die Bedieneinrichtung (1) derart ausgebildet ist, dass nach dem Drücken der Bedientaste (4) durch Drücken über eine längeren Zeitraum auf eine Softkeytaste (3a,3b,3c,3d), die solchermaßen gedrückte Softkeytaste (3a,3b,3c,3d) dem aufgerufenen Bedienbild (6') zugewiesen wird.

2. Werkzeugmaschine, Produktionsmaschine, Kran und/oder Roboter mit einer Bedieneinrichtung nach Anspruch 1.

3. Verfahren zum Zuweisen eines Bedienbilds (6') an eine Softkeytaste (3a,3b,3c,3d) bei einer Bedieneinrichtung (1) zur Bedienung einer Werkzeugmaschine, einer Produktionsmaschine, eines Krans und/oder eines Roboters, wobei ein Bedienbild (6') aufgerufen wird, wobei das aufgerufene Bedienbild (6') von der Bedieneinrichtung (1) visualisiert wird, wobei durch Drücken auf eine Bedientaste (4) ein Anwendermenü (10) visualisiert wird, das Beschriftungsfelder (5a",5b",5c",5d") aufweist, die den jeweilig zugehörigen Softkeytasten (3a,3b,3c,3d) zugeordnet sind, **dadurch gekennzeichnet, dass** nach dem Drücken der Bedientaste (4) durch Drücken über eine längeren Zeitraum auf eine Softkeytaste (3a,3b,3c,3d), die solchermaßen gedrückte Softkeytaste (3a,3b,3c,3d) dem aufgerufenen Bedienbild (6') zugewiesen wird.

## Claims

1. Operator control unit (1) for operating a machine tool, a production machine, a crane and/or a robot, with the operator control unit (1) comprising a screen (2), softkey buttons (3a,3b,3c,3d) and an operating button (4), the operator control unit (1) being designed such that on invoking an on-screen display (6'), the invoked on-screen display (6') is displayed, and the operator control unit (1) being designed such that a user menu (10) is displayed by pressing the operating button (4), the user menu having labelling fields (5a",5b",5c",5d"), which are assigned to the respectively associated softkey buttons (3a,3b,3c,3d), **characterized in that** the operator control unit (1) is designed such that, after pressing the operating button (4), by pressing a softkey button (3a,3b,3c,3d) for a certain length of time, the softkey button (3a,3b,3c,3d) pressed in this manner is assigned to the invoked on-screen display (6').

2. Machine tool, production machine, crane and/or robot containing an operator control unit according to Claim 1.

3. Method for assigning an on-screen display (6') to a softkey button (3a,3b,3c,3d) in an operator control unit (1) for operating a machine tool, a production machine, a crane and/or a robot, with an on-screen display (6') being invoked, the invoked on-screen display (6') being displayed by the operator control unit (1), a user menu (10) being displayed by pressing an operating button (4), the user menu having labelling fields (5a",5b",5c",5d"), which are assigned to the respectively associated softkey buttons (3a,3b,3c,3d), **characterized in that** after pressing the operating button (4), by pressing a softkey button (3a,3b,3c,3d) for a certain length of time, the softkey button (3a,3b,3c,3d) pressed in this manner is assigned to the invoked on-screen display (6').

## Revendications

1. Dispositif ( 1 ) de commande d'une machine-outil, d'une machine de production, d'une grue et/ou d'un robot, le dispositif ( 1 ) de commande ayant un écran ( 2 ), des touches ( 3a, 3b, 3c, 3d ) d'option et une touche ( 4 ) de commande, le dispositif ( 1 ) de commande étant constitué de manière à ce que, lorsqu'une image ( 6' ) de commande est appelée, l'image ( 6 ) de commande soit visualisée, le dispositif ( 1 ) de commande étant constitué de manière à visualiser, en appuyant sur la touche ( 4 ) de commande, un menu ( 10 ) d'utilisateur, qui a des champs ( 5a", 5b", 5c", 5d" ) d'inscription affectés aux touches ( 3a, 3b, 3c, 3d ) d'option associées respectivement, **caractérisé en ce que** le dispositif ( 1 ) de commande est constitué de manière à ce que, après avoir appuyé sur la touche ( 4 ) de commande, en appuyant pendant un laps de temps assez grand sur une touche ( 3a, 3b, 3c, 3d ) d'option, la touche ( 3a, 3b, 3c, 3d ) d'option, sur laquelle on a ainsi appuyé, est assignée à une image ( 6' ) de commande appelée.

2. Machine-outil, machine de production, grue et/ou robot ayant un dispositif de commande suivant la revendication 1.

3. Procédé d'assignation d'une image ( 6' ) de commande à une touche ( 3a, 3b, 3c, 3d ) d'option dans un dispositif ( 1 ) de commande d'une machine-outil, d'une machine de production, d'une grue et/ou d'un robot, dans lequel on appelle une image ( 6' ) de commande, l'image ( 6' ) de commande appelée étant visualisée par le dispositif ( 1 ) de commande, dans lequel en appuyant sur une touche ( 4 ) de commande on visualise un menu ( 10 ) d'utilisateur, qui a des champs ( 5a", 5b", 5c", 5d" ) d'inscription, qui sont affectés aux touches ( 3a, 3b, 3c, 3d ) d'option associées respectivement, **caractérisé en ce que** le dispositif ( 1 ) de commande est constitué de manière à ce que, après avoir appuyé sur la touche ( 4 ) de commande, en appuyant pendant un laps de temps assez grand sur une touche ( 3a, 3b, 3c, 3d ) d'option, la touche ( 3a, 3b, 3c, 3d ) d'option, sur laquelle on a ainsi appuyé, est assignée à une image ( 6' ) de commande appelée.
